# EUROPÄISCHE PATENTSCHRIFT

(11) **EP 2 926 093 B1**
(45) Veröffentlichungstag und Bekanntmachung des Hinweises auf die Patenterteilung: **20.03.2019**
(21) Anmeldenummer: 13792636.6
(22) Anmeldetag: 12.11.2013
(51) Int. Cl.: G01D 11/24, G01D 11/26

(54) **MIT EINEM SICHTFENSTER AUSGESTATTETES GEHÄUSE**
HOUSING EQUIPPED WITH A VIEW WINDOW
LOGEMENT ÉQUIPÉ D'UNE FENÊTRE D'OBSERVATION

(30) Priorität: 30.11.2012 DE 102012111662
(43) Veröffentlichungstag der Anmeldung: 07.10.2015
(73) Patentinhaber: Endress+Hauser Flowtec AG, 4153 Reinach (BL) (CH)
(72) Erfinder: MOSER, Thiérry, F-68510 Sierentz (FR)
(74) Vertreter: Andres, Angelika Maria
(86) Internationale Anmeldenummer: PCT/EP2013/073584
(87) Internationale Veröffentlichungsnummer: WO 2014/082849

(56) Entgegenhaltungen:
- EP-A1- 2 107 345
- DE-A1- 4 304 370
- US-A- 4 154 116

## Beschreibung

Die Erfindung betrifft ein mit einem Sichtfenster ausgestattetes Gehäuse einer Vorortanzeige oder eines Messgeräts zur Messung von Prozessgrößen. Mit Sichtfenstern ausgestatte Gehäuse werden unter anderem in der industriellen Messtechnik eingesetzt. Ein Beispiel hierfür sind Messgeräte, bei denen in einem Gehäuse eine Vorortanzeige, insb. zur Anzeige von Messwerten und/oder Betriebsparametern, vorgesehen ist, die durch das Sichtfenster hindurch von außen einsehbar ist.

An Gehäuse mit Sichtfenstern werden insb. für deren Einsatz in der industriellen Messtechnik je nach Einsatzort eine Vielzahl von Anforderungen gestellt. Hierzu gehören insb. Hygieneanforderungen für den Einsatz in der Pharmaindustrie und in der Lebensmittelindustrie.

Es sind heute bereits mit Sichtfenstern ausgestatte Gehäuse im Einsatz, die eine Außenwand aufweisen, in der eine in der Regel kreisförmige Ausnehmung vorgesehen ist, die in den Innenraum des Gehäuses mündet. Für das Sichtfenster wird regelmäßig eine planare, in der Regel kreisscheibenförmige, Scheibe aus Glas oder Kunststoff verwendet, deren Querschnittsfläche größer als die Querschnittsfläche der Ausnehmung ist. Diese Scheibe wird im Inneren des Gehäuses derart befestigt, dass ein äußerer Rand der Scheibe auf einer die Ausnehmung umgebenden Innenseite der Außenwand aufliegt.

Diese Gehäuse weisen den Vorteil auf, dass die Außenwand des Gehäuses im Bezug auf im Gehäuseinnenraum entstehende Drücke eine mechanisch stabile Auflagefläche für das Sichtfenster bildet.

Nachteilig ist, dass sich in der außen vor der Scheibe befindlichen Ausnehmung Wasser oder Verschmutzungen aus der Umgebung des Gehäuses ansammeln können. Hierdurch können sich mit der Zeit Ablagerungen auf dem Sichtfenster bilden. Die Ausnehmung bildet einen Hohlraum, der nur schwer zu reinigen ist. Entsprechend sind diese Gehäuse für Anwendungen mit hohen Hygieneanforderungen nicht geeignet.

Darüber hinaus können Ablagerungen in der Ausnehmung zu einer Beeinträchtigung der Einsehbarkeit des Gehäuseinnenraums durch das Sichtfenster hindurch führen.

In der WO 2012/000526 A1 ist ein mit einem Sichtfenster ausgestattetes Gehäuse beschrieben, bei dem das Sichtfenster durch eine planare Kunststoffscheibe gebildet ist, die frontbündig in eine Ausnehmung im Gehäuse eingesetzt ist.

Hierzu liegt ein äußerer Rand des scheibenförmigen Sichtfensters unter Zwischenfügung einer Dichtung auf einer nach außen weisenden die Ausnehmung umgebenden Absatzfläche in der Außenwand auf. Das scheibenförmige Sichtfenster weist eine in aus dem Gehäuse heraus weisender Richtung sich konisch verjüngende äußere Mantelfläche auf, und ist auf der Absatzfläche mechanisch befestigt, indem mittels Umformung eines die Ausnehmung und die Absatzfläche außenseitlich umgebenden Wulstes aus dem Werkstoff des Gehäuses eine formschlüssige Verbindung derart erzeugt wird, dass die resultierende Verbindungsstelle zwischen Sichtfenster und Gehäuse auf der Außenseite des Gehäuses einen im Wesentlichen fugenlosen stufenfreien Übergang bildet.

Die Umformung des Wulstes stellt einen zusätzlichen technisch anspruchsvollen Arbeitsgang dar, bei dem die eingesetzte Kunststoffscheibe unter Umständen mechanisch stark belastet wird. Es können daher nur solche Kunststoffe eingesetzt werden, die diesen Belastungen standhalten.

Demgegenüber besteht in der Industrie regelmäßig der Wunsch Sichtfenster aus einem Material zu verwenden, dass aufgrund seiner chemischen und mechanischen Eigenschaften für die jeweilige Anwendung optimal geeignet ist. Dabei sind je nach Anwendung unterschiedliche chemische Eigenschaften, wie z.B. eine chemische Beständigkeit gegenüber Säuren, Basen oder aggressiven Reinigungsmitteln, und physikalische Eigenschaften, wie z.B. eine Temperaturbeständigkeit, eine Kratzfestigkeit oder eine glatte Oberfläche, gefragt.

Es ist eine Aufgabe der Erfindung ein möglichst vielseitig einsetzbares mit einem Sichtfenster ausgestattetes Gehäuse anzugeben.

Hierzu umfasst die Erfindung ein Gehäuse mit
- einem Gehäusesegment,
   -- an dessen aus dem Gehäuse herausweisenden Ende eine sich radial nach innen erstreckende Schulter anschließt, die endseitig eine sich vom Gehäuseinnenraum zum Gehäuseaußenraum hin konisch verjüngende Öffnung des Gehäuses außenseitlich umschließt,
- einem frontbündig in die Öffnung eingesetzten scheibenförmigen Sichtfenster,
   -- das eine an dessen nach außen weisende Oberfläche angrenzende sich vom Gehäuseinnenraum zum Gehäuseaußenraum hin konisch verjüngende außenseitliche Mantelfläche aufweist,
- einer einteiligen Formdichtung, die einen ersten Teilbereich aufweist, der das Sichtfenster außenseitlich vollständig umschließt, und die einen zweiten Teilbereich aufweist, auf dem ein äußerer Rand einer in das Gehäuse hineinweisenden Oberfläche des Sichtfensters aufliegt, und
- einem in das Gehäusesegment eingebrachten und im Gehäusesegment befestigten Stützring, durch den das Sichtfenster in das Gehäusesegment eingespannt ist.

Gemäß einer ersten Ausgestaltung der Erfindung weist die Schulter einen endseitig an das Gehäusesegment angrenzenden senkrecht zur Längsachse des Gehäusesegments verlaufenden Wandbereich auf, an den endseitig ein die Öffnung umschließender sich parallel zur Längsachse konisch verjüngender Wandbereich anschließt.

Weiter umfasst die Erfindung eine zweite Ausgestaltung der Erfindung, bei der
- lediglich ein an die nach außen weisende Oberfläche des Sichtfenster angrenzender scheibenförmiger Teilbereich des Sichtfenster außenseitlich eine konische Mantelfläche aufweist, und
- die Schulter einen endseitig an das Gehäusesegment angrenzenden senkrecht zur Längsachse des Gehäusesegments verlaufenden Wandbereich aufweist, dessen innere die Öffnung umschließende Mantelfläche konisch ist.

Bei diesen beiden Ausgestaltungen bestehen das Gehäusesegment und die Schulter vorzugsweise aus einem einteiligen Blech, insb. einem Blech aus rostfreiem Stahl, und der Stützring ist vorzugsweise in das Gehäusesegment eingeschweißt.

Weiter umfasst die Erfindung eine dritte Ausgestaltung der Erfindung, bei der
- sich die außenseitliche konische Mantelfläche des Sichtfensters über die gesamte Dicke des Sichtfensters erstreckt, und
- die sich radial nach innen erstreckende Schulter eine ins Innere des Gehäusesegments weisende sich vom Gehäuseinnenraum zum Gehäuseaußenraum hin konisch verjüngende Mantelfläche aufweist.

Bei dieser dritten Ausgestaltung bestehen das Gehäusesegment und die Schulter vorzugsweise aus Metall, insb. aus Aluminium, und der Stützring ist vorzugsweise in das Gehäusesegment eingeschraubt oder eingenietet.

Die Sichtfenster der erfindungsgemäßen Gehäuse bestehen vorzugsweise aus Glas oder aus Kunststoff, und die Formdichtungen der erfindungsgemäßen Gehäuse bestehen vorzugsweise aus einem Elastomer.

Die erfindungsgemäßen Gehäuse weisen aufgrund der frontbündig eingesetzten Sichtfenster den Vorteil auf, dass sie nach außen spalt- und hinterschneidungsfrei abschließen, und damit auch für den Einsatz in Anwendungen, z.B. in der Pharma- oder in der Lebensmittelindustrie, geeignet sind, in denen hohe Anforderungen an Hygiene und Reinigbarkeit gestellt werden.
Da die Formdichtung alle von der mechanischen Einspannung des Sichtfensters betroffenen Fensteraußenflächen umschließt, ist das Sichtfenster vor durch die Einspannung bedingten mechanischen Belastungen, insb. vor Verspannungen, geschützt. Das Material des Sichtfensters kann folglich weitgehend frei gewählt, und somit optimal an die Anforderungen am Einsatzort angepasst werden.
Die Erfindung und weitere Vorteile werden nun anhand der Figuren der Zeichnung, in denen drei Ausführungsbeispiele dargestellt sind, näher erläutert; gleiche Teile sind in den Figuren mit gleichen Bezugszeichen versehen.
- Fig. 1 zeigt:: eine Schnittzeichnung eines ersten Ausführungsbeispiels eines erfindungsgemäßen mit einem Sichtfenster ausgestatteten Gehäuses;
- Fig. 2 zeigt:: eine Schnittzeichnung eines zweiten Ausführungsbeispiels eines erfindungsgemäßen mit einem Sichtfenster ausgestatteten Gehäuses; und
- Fig. 3 zeigt:: eine Schnittzeichnung eines dritten Ausführungsbeispiels eines erfindungsgemäßen mit einem Sichtfenster ausgestatteten Gehäuses.

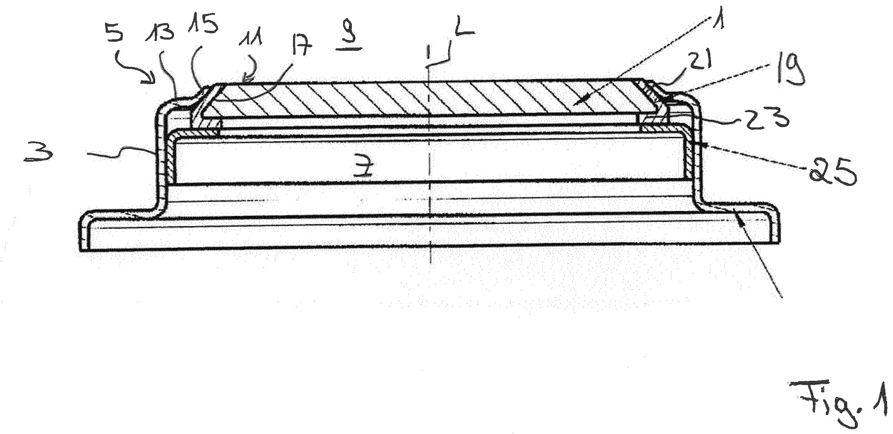

Fig. 1 zeigt eine Schnittzeichnung eines ersten Ausführungsbeispiels erfindungsgemäßen mit einem Sichtfenster 1 ausgestatteten Gehäuses.

Das Gehäuse ist beispielsweise ein Gehäuse eines Messgeräts zur Messung von Prozessgrößen oder ein Gehäuse einer Vorortanzeige. Diese Gehäuse werden z.B. in der Mess- und Regeltechnik und in der Prozessautomatisierung in industriellen Anlagen eingesetzt. Über das Sichtfenster 1 ist ein vom Sichtfenster 1 abgedeckter Teilbereich des Gehäuseinnenraums von außen einsehbar. In dem einsehbaren Teilbereich ist beispielsweise ein hier nicht dargestelltes Display und/oder eine LED-Anzeige angeordnet.

Das Gehäuse umfasst ein Gehäusesegment 3, an dessen aus dem Gehäuse herausweisenden Ende sich eine sich radial nach innen erstreckende Schulter 5 anschließt, die endseitig eine sich vom Gehäuseinnenraum 7 zum Gehäuseaußenraum 9 hin konisch verjüngende Öffnung 11 des Gehäuses außenseitlich umschließt.

Das ist in dem in Fig. 1 dargestellten Ausführungsbeispiel dadurch realisiert, dass die Schulter 5 einen endseitig an das Gehäusesegment 3 angrenzenden senkrecht zur Längsachse L des Gehäusesegments 3 verlaufenden Wandbereich 13 aufweist, an den endseitig ein die Öffnung 11 umschließender sich parallel zur Längsachse L konisch verjüngender Wandbereich 15 anschließt.

Dabei bestehen das Gehäusesegment 3 und die Schulter 5 insgesamt vorzugsweise aus einem einteiligen Blech, insb. einem Blech aus rostfreiem Stahl, das beispielsweise in einem Tiefziehverfahren hergestellt werden kann.

Das Gehäusesegment 3 ist beispielsweise Bestandteil eines Gehäusedeckels. Es ist hier als zylindrisches Element mit kreisförmiger Grundfläche ausgebildet. Alternativ könnte es auch eine rechteckförmige oder quadratische Grundfläche aufweisen.

Das Sichtfenster 1 ist scheibenförmig ausgebildet, und weist eine an dessen nach außen weisende Oberfläche angrenzende sich vom Gehäuseinnenraum 7 zum Gehäuseaußenraum 9 hin konisch verjüngende außenseitliche Mantelfläche 17 auf. Das Sichtfenster 1 besteht vorzugsweise aus einem Glas oder aus einem transparenten Kunststoff.

Das Sichtfenster 1 ist in eine einteilige Formdichtung 19 eingefasst. Diese umfasst hierzu einen ersten Teilbereich 21, der das Sichtfenster 1 außenseitlich vollständig umschließt, und einen zweiten Teilbereich 23, auf dem ein äußerer Rand einer in das Gehäuse hineinweisenden Oberfläche des Sichtfensters 1 aufliegt. Die Formdichtung 19 besteht beispielsweise aus einem Elastomer.

Das in die Formdichtung 19 eingefasste Sichtfenster 1 wird frontbündig in die Öffnung 11 eingesetzt. Anschließend wird ein Stützring 25 vom Gehäuseinnenraum 7 her derart in das Gehäusesegment 3 eingebracht, dass der vom zweiten Teilbereich der Formdichtung 19 umgebene Randbereich der in den Gehäuseinnenraum 5 hinein weisenden Oberfläche des Sichtfensters 1 auf einer ringförmigen aus dem Gehäusesegment 3 heraus weisenden Stirnfläche des Stützrings 25 aufliegt. Abschließend wird der Stützring 25 im Gehäusesegment 3 befestigt. Hierzu kann der Stützring 25 beispielsweise in das Gehäusesegment 3 eingeschweißt werden.

Diese Form der Einspannung des Sichtfensters 1 ermöglicht einen materialschonenden frontbündigen Einbau. Da alle von der Einspannung betroffenen Außenflächen des Sichtfensters 1 von der Formdichtung 19 umschlossen sind, ist das Sichtfenster 1 vor mechanischen Belastungen, insb. vor durch dessen Einspannung bedingten Verspannungen, geschützt. Dementsprechend kann der Werkstoff, aus dem das Sichtfenster 1 besteht, weitestgehend frei gewählt, und damit optimal an die Bedürfnisse der jeweiligen Anwendung, in der das Gehäuse letztendlich eingesetzt werden soll, angepasst werden. Aufgrund des frontbündigen Einbaus des Sichtfensters 1 ist das Gehäuse im Bereich des Sichtfensters 1 weitgehend spalt- und hinterschneidungsfrei, und leicht zu reinigen. Das Gehäuse kann somit ohne weiteres auch in Anwendungen eingesetzt werden, in denen hohe Anforderungen an die Hygiene und/oder die Reinigbarkeit des Gehäuses bestehen.

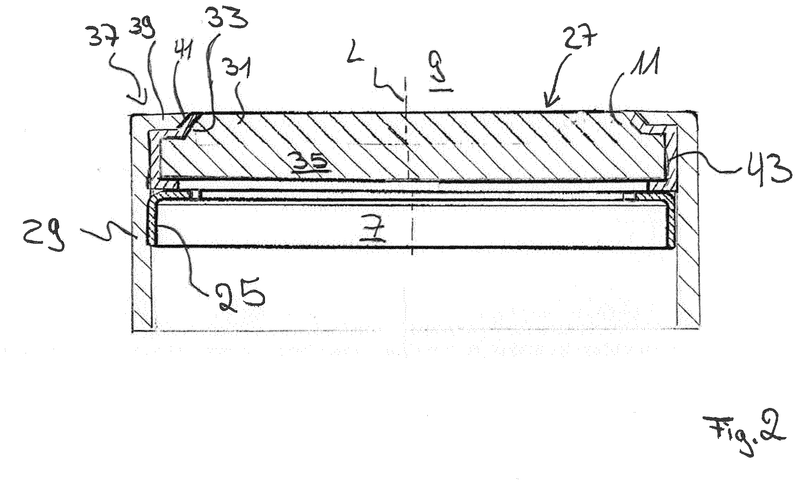

Fig. 2 zeigt ein weiteres Ausführungsbeispiel eines erfindungsgemäßen mit einem Sichtfenster 27 ausgestatteten Gehäuses. Auch hier ist das Sichtfenster 27 auf die oben beschriebene belastungsfreie Weise in ein hier zylindrisches Gehäusesegment 29 eingesetzt, so dass nachfolgend lediglich die gegenüber dem Ausführungsbeispiel von Fig. 1 bestehenden Unterschiede erläutert sind.

In dem in Fig. 2 dargestellten Ausführungsbeispiel weist lediglich ein an die nach außen weisende Oberfläche des Sichtfenster 27 angrenzender scheibenförmiger Teilbereich 31 des Sichtfenster 27 außenseitlich eine konische Mantelfläche 33 auf. Der an den konischen Teilbereich 31 angrenzende übrige Teilbereich 35 des Sichtfensters 27 weist eine größere Querschnittsfläche auf als der konische Teilbereich 31.

Auch hier ist eine endseitig an das Gehäusesegment 29 anschließende sich radial nach innen erstreckende Schulter 37 vorgesehen, die eine sich vom Gehäuseinnenraum 7 zum Gehäuseaußenraum 9 hin konisch verjüngende Öffnung 11 außenseitlich umschließt. Diese umfasst hier einen senkrecht zur Längsachse L des Gehäusesegments 29 verlaufenden Wandbereich 39, der nach innen mit einer konischen die Öffnung 11 umschließenden Mantelfläche 41 abschließt.
Die Dicke des Wandbereichs 39 ist gleich der Dicke des konischen Teilbereichs 31 des Sichtfensters 27.

Auch hier ist das Sichtfenster 27 in eine Formdichtung 43 eingefasst, die die gesamte außenseitliche Mantelfläche des Sichtfensters 27, sowie den äußeren Rand von dessen in den Gehäuseinnenraum 7 weisenden Oberfläche umschließt. Das in die Formdichtung 43 eingesetzte Sichtfenster 27 ist auch hier mittels des Stützrings 25 in das Gehäusesegment 29 eingespannt, und schließt das Gehäuse nach außen frontbündig ab.

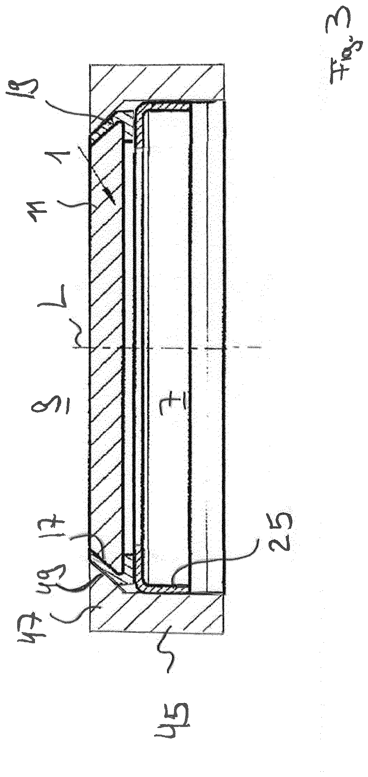

Fig. 3 zeigt ein weiteres Ausführungsbeispiel eines erfindungsgemäßen mit einem Sichtfenster ausgestatteten Gehäuses. Das Sichtfenster 1 ist identisch zu dem in Fig. 1 dargestellten, und ist auf die oben beschriebene Weise in ein Gehäusesegment 45 eingesetzt.

Genau wie bei dem in Fig. 1 dargestellten Ausführungsbeispiel weist das Sichtfenster 1 auch hier eine außenseitliche konische Mantelfläche 17 auf, die sich über die gesamte Dicke des Sichtfensters 1 erstreckt.

An das Gehäusesegment 45 ist auch hier endseitig eine radial sich nach innen erstreckende Schulter 47 angeformt. Gehäusesegment 45 und Schulter 47 sind hier als einteiliges Element aus einem Metall, z.B. aus Aluminium, gefertigt. Während Bleche in der Regel eine Wandstärke von 1,5 mm - 2 mm aufweisen, beträgt die Wandstärke von Gehäusesegment 45 und Schulter 47 hier beispielsweise 3 mm - 4 mm.

Die Schulter 47 weist endseitig eine ins Innere des Gehäusesegments 45 weisende sich vom Gehäuseinnenraum 7 zum Gehäuseaußenraum 9 hin konisch verjüngende Mantelfläche 49 auf, die die konische Mantelfläche 17 des Sichtfensters 1 umgibt.

Auch hier ist das Sichtfenster 1 in eine Formdichtung 19 eingefasst, die die gesamte außenseitliche Mantelfläche 17 des Sichtfensters 1, sowie den äußeren Rand von dessen in den Gehäuseinnenraum 7 weisenden Oberfläche umschließt. Das in die Formdichtung 17 eingesetzte Sichtfenster 1 ist mittels des Stützrings 25 in das Gehäusesegment 45 eingespannt, und schließt das Gehäuse nach außen frontbündig ab. Der Stützring 25 ist in das Gehäusesegment 45 beispielsweise eingeschraubt oder eingenietet.
- 1: Sichtfenster
- 3: Gehäusesegment
- 5: Schulter
- 7: Gehäuseinnenraum
- 9: Gehäuseaußenraum
- 11: Öffnung
- 13: Wandbereich
- 15: konischer Wandbereich
- 17: Mantelfläche
- 19: Formdichtung
- 21: erster Teilbereich der Formdichtung
- 23: zweiter Teilbereich der Formdichtung
- 25: Stützring
- 27: Sichtfenster
- 29: Gehäusesegment
- 31: konischer Teilbereich des Sichtfensters
- 33: konische Mantelfläche
- 35: Teilbereich
- 37: Schulter
- 39: Wandbereich
- 41: konische Mantelfläche
- 43: Formdichtung
- 45: Gehäusesegment
- 47: Schulter
- 49: konische Mantelfläche

## Patentansprüche

1. Gehäuse einer Vorortanzeige oder eines Messgeräts zur Messung von Prozessgrößen, welches Gehäuse umfaßt:
- ein Gehäusesegment (3, 29, 45), an dessen aus dem Gehäuse herausweisenden Ende eine sich radial nach innen erstreckende Schulter (5, 37, 47) anschließt, die endseitig eine sich vom Gehäuseinnenraum (7) zum Gehäuseaußenraum (9) hin konisch verjüngende Öffnung (11) des Gehäuses außenseitlich umschließt,
- ein frontbündig in die Öffnung (11) eingesetztes scheibenförmiges Sichtfenster (1, 27), das eine an dessen nach außen weisende Oberfläche angrenzende sich vom Gehäuseinnenraum (7) zum Gehäuseaußenraum (9) hin konisch verjüngende außenseitliche Mantelfläche (17, 33) aufweist,
- eine einteilige Formdichtung (19, 43), die einen ersten Teilbereich (21) aufweist, der das Sichtfenster (1, 27) außenseitlich vollständig umschließt, und die einen zweiten Teilbereich (23) aufweist, auf dem ein äußerer Rand einer in das Gehäuse hineinweisenden Oberfläche des Sichtfensters (1, 27) aufliegt, und
- einen in das Gehäusesegment (3, 29, 45) eingebrachten und im Gehäusesegment (3, 29, 45) befestigten Stützring (25), durch den das Sichtfenster (1, 27) in das Gehäusesegment (3, 29, 45) eingespannt ist;
- wobei über das Sichtfenster (1) ein vom Sichtfenster (1) abgedeckter Teilbereich des Gehäuseinnenraums von außen einsehbar ist,
- und wobei in dem einsehbaren Teilbereich ein Display und/oder eine LED- Anzeige angeordnet ist.

2. Gehäuse nach Anspruch 1, bei dem
die Schulter (5) einen endseitig an das Gehäusesegment (3) angrenzenden senkrecht zur Längsachse (L) des Gehäusesegments (3) verlaufenden Wandbereich (13) aufweist, an den endseitig ein die Öffnung (11) umschließender sich parallel zur Längsachse (L) konisch verjüngender Wandbereich (15) anschließt.

3. Gehäuse nach Anspruch 1, bei dem
- lediglich ein an die nach außen weisende Oberfläche des Sichtfenster (27) angrenzender scheibenförmiger Teilbereich (31) des Sichtfenster (27) außenseitlich eine konische Mantelfläche (33) aufweist, und
- die Schulter (37) einen endseitig an das Gehäusesegment (29) angrenzenden senkrecht zur Längsachse (L) des Gehäusesegments (29) verlaufenden Wandbereich (39) aufweist, dessen innere die Öffnung (11) umschließende Mantelfläche (41) konisch ist.

4. Gehäuse nach Anspruch 1, 2 oder 3, bei dem
das Gehäusesegment (3, 29) und die Schulter (5, 37) aus einem einteiligen Blech, insb. einem Blech aus rostfreiem Stahl, bestehen.

5. Gehäuse nach Anspruch 4, bei dem der Stützring (25) in das Gehäusesegment (3, 29) eingeschweißt ist.

6. Gehäuse nach Anspruch 1, bei dem
- sich die außenseitliche konische Mantelfläche (17) des Sichtfensters (1) über die gesamte Dicke des Sichtfensters (1) erstreckt, und
- die sich radial nach innen erstreckende Schulter (47) eine ins Innere des Gehäusesegments (45) weisende sich vom Gehäuseinnenraum (7) zum Gehäuseaußenraum (9) hin konisch verjüngende Mantelfläche (49) aufweist.

7. Gehäuse nach Anspruch 6, bei dem
das Gehäusesegment (45) und die Schulter (47) aus Metall, insb. aus Aluminium, bestehen.

8. Gehäuse nach Anspruch 7, bei dem
der Stützring (25) in das Gehäusesegment (45) eingeschraubt oder eingenietet ist.

9. Gehäuse nach Anspruch 1, bei dem
das Sichtfenster (1, 27) aus Glas oder aus Kunststoff besteht.

10. Gehäuse nach Anspruch 1, bei dem
die Formdichtung (19, 43) aus einem Elastomer besteht.

11. Gehäuse nach Anspruch 1, wobei der Stützring (25) vom Gehäuseinnenraum (7) her derart in das Gehäusesegment (3) eingebracht ist, dass der vom zweiten Teilbereich der Formdichtung (19) umgebene Randbereich der in den Gehäuseinnenraum (5) hinein weisenden Oberfläche des Sichtfensters (1) auf einer ringförmigen aus dem Gehäusesegment (3) heraus weisenden Stirnfläche des Stützrings (25) aufliegt.

## Claims

1. Housing of a local display or of a measuring device for the measurement of process variables, said housing comprising:
- a housing segment (3, 29, 45), wherein a shoulder which extends radially inwards (5, 37, 47) continues on from the end of said segment that points out of the housing, said shoulder externally surrounding at an end an opening (11) that tapers conically from the housing interior (7) to the housing exterior (9),
- a transparent window (1, 27) in the form of a disc which is inserted into the opening (11) in a flush-mounted manner, said window having an external shell surface (17, 33) which tapers conically from the housing interior (7) to the housing exterior (9) and is adjacent to the surface of the window pointing towards the outside,
- a one-piece gasket seal (19, 43), which has a first subsection (21), which fully surrounds the transparent window (1, 27) on the outside, and which has a second subsection (23) on which an outer edge of a surface of the transparent window (1, 27), which points into the housing, rests, and
- a support ring (25) that is fitted in the housing segment (3, 29, 45) and secured in the housing segment (3, 29, 45), via said support ring the transparent window (1, 27) is clamped in the housing segment (3, 29, 45);
- wherein a partial area of the housing interior that is covered by the transparent window (1), is visible from the outside via the transparent window (1),
- and wherein a display and/or an LED display is arranged in the visible partial area.

2. Housing as claimed in Claim 1, wherein
the shoulder (5) has a wall area (13) which is adjacent to the housing segment (3) at an end and extends perpendicularly to the longitudinal axis (L) of the housing segment (3), and wherein a wall area (15), which tapers conically parallel to the longitudinal axis (L) and surrounds the opening (11), continues on from said wall area (13).

3. Housing as claimed in Claim 1, wherein
- a single disk-shaped area (31) of the transparent window (27) adjacent to the surface of the transparent window (27) facing towards the outside has a conical shell surface (33) on the exterior, and
- the shoulder (37) has a wall area (39) which is adjacent to the housing segment (29) at an end and extends perpendicularly to the longitudinal axis (L) of the housing segment (29), wherein the interior shell surface (41) of said wall area which surrounds the opening (11) is conical.

4. Housing as claimed in Claim 1, 2 or 3, wherein the housing segment (3, 29) and the shoulder (5, 37) are made from a single metal sheet, particularly a sheet of stainless steel.

5. Housing as claimed in Claim 4, wherein
the support ring (25) is welded into the housing segment (3, 29).

6. Housing as claimed in Claim 1, wherein
- the exterior conical shell surface (17) of the transparent window (1) extends over the entire thickness of the transparent window (1), and
- the shoulder (47) that extends radially towards the inside has a shell surface (49) which points towards the interior of the housing segment (45) and tapers conically from the interior of the housing (7) to the exterior of the housing (9).

7. Housing as claimed in Claim 6, wherein the housing segment (45) and the shoulder (47) are made from metal, particularly aluminum.

8. Housing as claimed in Claim 7, wherein the support ring (25) is screwed or riveted into the housing segment (45).

9. Housing as claimed in Claim 1, wherein the transparent window (1, 27) is made from glass or plastic.

10. Housing as claimed in Claim 1, wherein the gasket seal (19, 43) is made from an elastomer.

11. Housing as claimed in Claim 1, wherein the support ring (25) is introduced into the housing segment (3) from the interior housing compartment (7) in such a way that the peripheral area - surrounded by the second subsection of the gasket seal (19) - of the surface of the transparent window (1) pointing toward the interior of the housing (5) rests on a front face of the support ring (25) pointing out of the housing segment (3).

## Revendications

1. Boîtier d'un afficheur local ou d'un appareil de mesure destiné à la mesure de grandeurs process, lequel boîtier comprend :
- un segment de boîtier (3, 29, 45), à l'extrémité - pointant hors du boîtier-duquel se rattache un épaulement (5, 37, 47) qui s'étend radialement vers l'intérieur, lequel épaulement entoure à l'extrémité une ouverture (11) se rétrécissant coniquement depuis l'intérieur du boîtier (7) vers l'extérieur du boîtier (9),
- une fenêtre transparente (1, 27) en forme de disque, insérée de façon affleurante dans l'ouverture (11), laquelle fenêtre présente une surface d'enveloppe extérieure (17, 33) se rétrécissant coniquement depuis l'intérieur du boîtier (7) vers l'extérieur du boîtier (9) et adjacente à la surface pointant vers l'extérieur de la fenêtre,
- un joint moulé (19, 43), qui présente une première zone partielle (21), qui entoure complètement la fenêtre transparente (1, 27) à l'extérieur, et qui présente une deuxième zone partielle (23), sur laquelle repose un bord extérieur d'une surface tournée vers le boîtier de la fenêtre transparente (1, 27), et
- une bague d'appui (25) logée dans le segment de boîtier (3, 29, 45) et fixée dans le segment de boîtier (3, 29, 45), bague à travers laquelle la fenêtre transparente (1, 27) est serrée dans le segment de boîtier (3, 29, 45) ;
- une zone partielle de l'intérieur du boîtier, recouverte par la fenêtre transparente (1), étant visible de l'extérieur à travers la fenêtre transparente (1),
- et un afficheur et/ou un dispositif d'affichage à LED étant disposé dans la zone partielle visible.

2. Boîtier selon la revendication 1, pour lequel
l'épaulement (5) présente une zone de paroi (13) adjacente à l'extrémité du segment de boîtier (3) et s'étend perpendiculairement à l'axe longitudinal (L) du segment de boîtier (3), et à laquelle est contiguë une zone de paroi (15) entourant l'ouverture (11) et se rétrécissant coniquement, parallèlement à l'axe longitudinal (L).

3. Boîtier selon la revendication 1, pour lequel
- une seule zone partielle en forme de disque (31) de la fenêtre transparente (27) adjacente à la surface tournée vers l'extérieur de la fenêtre transparente (27) présente à l'extérieur une surface d'enveloppe conique (33), et
- l'épaulement (37) présente une zone de paroi (39) adjacente à l'extrémité du segment de boîtier (29) et s'étend perpendiculairement à l'axe longitudinal (L) du segment de boîtier (29), zone de paroi dont la surface d'enveloppe (41) intérieure et entourant l'ouverture (11) est conique.

4. Boîtier selon la revendication 1, 2 ou 3, pour lequel le segment de boîtier (3, 29) et l'épaulement (5, 37) sont constitués d'une tôle en une pièce, notamment d'une tôle en acier inoxydable.

5. Boîtier selon la revendication 4, pour lequel
la bague d'appui (25) est soudée dans le segment de boîtier (3, 29).

6. Boîtier selon la revendication 1, pour lequel
- la surface d'enveloppe conique extérieure (17) de la fenêtre transparente (1) s'étend sur toute l'épaisseur de la fenêtre transparente (1), et
- l'épaulement (47) qui s'étend radialement vers l'intérieur du boîtier (7) présente une surface d'enveloppe (49) pointant vers l'intérieur du segment de boîtier (45) et qui se rétrécit coniquement de l'intérieur du boîtier (7) vers l'extérieur du boîtier (9).

7. Boîtier selon la revendication 6, pour lequel le segment de boîtier (45) et l'épaulement (47) sont en métal, notamment en aluminium.

8. Boîtier selon la revendication 7, pour lequel la bague d'appui est vissée ou rivée dans le segment de boîtier (45).

9. Boîtier selon la revendication 1, pour lequel la fenêtre transparente (1, 27) est en verre ou en plastique.

10. Boîtier selon la revendication 1, pour lequel le joint moulé (19, 43) est constitué d'un élastomère.

11. Boîtier selon la revendication 1, pour lequel la bague d'appui (25) est logée depuis l'intérieur du boîtier (7) dans le segment de boîtier (3) de telle sorte que la zone marginale - entourée par la deuxième zone partielle du joint moulé (19) - de la surface pointant vers l'intérieur du boîtier (5) de la fenêtre transparente (1) repose sur une face frontale annulaire de la bague d'appui (25) pointant hors du segment de boîtier (3).
